# EUROPÄISCHE PATENTSCHRIFT

(11) **EP 1 872 166 B1**
(45) Veröffentlichungstag und Bekanntmachung des Hinweises auf die Patenterteilung: **08.07.2009**
(21) Anmeldenummer: 06721915.4
(22) Anmeldetag: 19.04.2006
(51) Int. Cl.: G02B 7/00

(54) **FARBRAD MIT SELBSTJUSTIERTEN SEGMENTEN**
COLOR WHEEL COMPRISING SELF-ADJUSTED SEGMENTS
ROUE CHROMATIQUE A SEGMENTS A AJUSTAGE AUTOMATIQUE

(30) Priorität: 22.06.2005 DE 102005029296; 22.04.2005 US 674207 P
(43) Veröffentlichungstag der Anmeldung: 02.01.2008
(73) Patentinhaber: Oerlikon Trading AG, Trübbach, 9477 Trübbach (CH)
(72) Erfinder: AUELL, Adam, Morrison, CO 80465 (US)
(74) Vertreter: Kempkens, Anke
(86) Internationale Anmeldenummer: PCT/CH2006/000213
(87) Internationale Veröffentlichungsnummer: WO 2006/111036

(56) Entgegenhaltungen:
- US-A- 6 011 662
- PATENT ABSTRACTS OF JAPAN Bd. 2003, Nr. 12, 5. Dezember 2003 (2003-12-05) -& JP 2004 101827 A (NIDEC COPAL ELECTRONICS CORP), 2. April 2004 (2004-04-02)

## Beschreibung

### Technisches Gebiet

Diese Beschreibung bezieht sich auf ein drehbares Farbrad zum Einsatz in Projektoren, um farbsequentielle Beleuchtung eines bildgebenden Elementes zu ermöglichen.

### Hintergrund und Stand der Technik

Die meisten Projektoren verwenden lediglich ein bildgebendes Element, um Farbbilder auf einem Schirm zu erzeugen: Um ein Farbbild zu erzeugen muss das bildgebende Element mit Lichtstrahlen unterschiedlicher Farbe sequenziell beleuchtet werden. Wird die Sequenz mit genügend hoher Frequenz ausgeführt, so ist das menschliche Auge nicht in der Lage die resultierende Sequenz von einfarbigen Farbbildern zeitlich aufzulösen. Als Folge entsteht für den Betrachter der Eindruck eines mehrfarbigen Farbbildes. Eine Methode, die dazu benötigte sequenzielle Beleuchtung zu realisieren, besteht darin dichroitische Filtersegmente an einem drehbaren Träger zu fixieren und die Filtersegmente in den optischen Weg eines Lichtstrahls zu platzieren. Bei entsprechender geometrischer Anordnung entsteht ein Farbrad, dass, wenn der Träger an die Achse eines Motors gekoppelt ist, rotierbar ist. Da die Rotation eines derartigen Rades in der Anwendung ziemlich schnell sein muss, treten starke Zentrifugalkräfte auf die auf die dirchroitischen Filtersegmente wirken. Daher müssen die Mittel, die gebraucht werden um die Filter an den Träger zu fixieren genügend Stabilität geben.

In den meisten Fällen ist es allerdings ausreichend die Farbfiltersegemte lediglich durch Verkleben an den Träger zu fixieren. US 5,868,482 (Edlinger) offenbart ein solches Farbrad, das einen scheibenförmigen Träger umfasst und bei dem die Farbfilter Segmente an der Peripherie des scheibenförmigen Trägers mittels eines Epoxy-Klebers befestigt sind.

Allerdings schweigt die Offenbarung zur Justage dieser Farbfilter auf dem scheibenförmigen Träger. Die Justage ist schon deshalb wichtig, da ein gut ausgewuchtetes Farbrad notwendig ist, um die schnelle Rotation des Rades zu ermöglichen. Sind die Segmente nicht justiert, so werden weitere Massnahmen zum Auswuchten notwendig. Das Assemblierverfahren umfasst zeitaufändige Schritte wie Aufbringen von Klebstoff, Justieren der Segmente, Aushärten des Klebstoffs, Auswuchten des Rades. Ein solches Verfahren kann nur schwer automatisiert werden und ist daher teuer.

Es kommt hinzu, dass es in manchen Fällen nicht ausreichend erscheint, die Segmente ausschliesslich durch Kleber an dem Träger zu fixieren. Manchmal sind beispielsweise mechanische Mittel zur weiteren Fixierung notwendig in Fällen bei denen, etwa auf der Basis von Kraftberechnungen, das Fixieren mit lediglich einem Kleber nicht ausreichend erscheint. In solchen Fällen werden gemäß dem Stand der Technik Löcher in die Segmente gebohrt und Schrauben werden verwendet um die Segmente zusätzlich an dem scheibenförmigen Träger zu befestigen. Dies ist aber ein recht kompliziertes Verfahren. Ausserdem wird dadurch die mechanische Stabilität der Segemente beeinträchtigt.

In US 6,011,662 wird ein Farbrad offenbart, das auswechselbare Filterelemente besitzt. Der scheibenförmige Träger umfasst spezifische Strukturen zur Befestigung der Segmente, einschliesslich eines Federelementes entlang der Peripherie des Trägers. Jedes Segment ist auf einer jeweils für dieses Segment bereitgestellten Plattform montiert.

Die Plattformen der Segmente umfassen konkave Einformungen, in die sich jeweils zugeordnete Zapfen, die auf dem Träger vorgesehen sind, einpassen. Ausserdem umfassen die Plattformen eine sich nach unten erstreckende Noppe, die sich in eine dafür vorgesehene Aushöhlung im Träger einfügen.

Jede Plattform umfasst eine abgeschrägte Einfüge-Kante auf der Oberseite. Der Täger umfasst eine Vielzahl von Zapfen und Einformungen. Das Farbelement wird in den Träger eingesetzt und nach unten gedrückt. Die Zapfen fügen sich in die konkaven Einformungen der Plattformen. Die Noppe wird in die Aushöhlung des Trägers eingesetzt.

Das Farbelement wird durch diese Strukturen in seiner Position auf dem Träger gehalten solange die Unterseite des Farbelementes nach unten auf den Träger gepresst wird. Die Feder dehnt sich lediglich über die abgeschrägte Kante auf der Plattform des Farbelementes aus. Das Farbelement kann vom Träger abhehoben werden, indem zuerst die Feder gehoben wird.

US 6,011,662 ist darauf ausgerichtet, ein Farbrad mit leicht auszuwechselnden, vom Benutzer wählbaren Farbfiltern zu ermöglichen. Wie anhand der Beschreibung oben leicht erkennbar ist dies allerdings ein relativ kompliziertes System: Filtersegmente müssen auf Plattformen befestigt werden die Federn umfassen u.s.w. Das dort beschriebene Farbrad stellt daher eine teure Lösung dar und der Fachmann würde diese nicht in Betracht ziehen hätte er die Aufgabe nach einem billigen Assemblierverfahren zu suchen.

### Zu lösende Aufgabe

Ziel der vorliegenden Erfindung ist eine Lösung, die zumindest teilweise die zuvor genannten Probleme des Standes der Technik überwindet. Der Fokus richtet sich dabei auf die Angabe eines Assemblierverfahrens, bei welchem die am Träger zu assemblierenden Segmente automatisch richtig justiert sind und mit einem Schritt fixiert sind. Das daraus hervorgehende Farbrad muss, falls überhaupt, nur zu einem geringen Maße ausgewuchtet werden. Das Farbrad sollte leicht und kostengünstig herstellbar sein. Die Fixierung der Segmente am Träger sollte nicht ausschliesslich über eine Klebeverbindung realisiert sein.

### Kurzbeschreibung der Erfindung

Die Lösung gemäß der vorliegenden Erfindung umfasst ein Farbrad mit einem scheibenförmigen Träger. Die Farbsegmente sind jeweils aus einem Stück gefertigt und umfassen konkave Einformungen. In diese Einformungen fügen sich formangepasste Zapfen, die auf dem scheibenförmigen Träger vorgesehen sind. Die Zapfen können gegebenenfalls auch an zusätzlichen Mitteln, die dazu dienen die Filtersegmente axial am scheibenförmigen Träger zu befestigen, vorgesehen sein. Solche zusätzlichen Mittel könnten beispielsweise ein Plastikring sein, der mittels chemischer Verbindung, mechanischer Schnappverbindung, Ultraschall-Schweissen oder anderen gegeigneten Verfahren fixiert wird.

Dies führt zu einem Farbrad für einen Projektor mit einem scheibenförmigen Träger, welcher um die Zentralachse rotierbar ist und am Träger angebrachte plane einstückige Farbfiltersegmente aufweist, welche in radialer Richtung zur Rotationsachse ausgerichtet sind und an der Trägerperipherie einen kreisringförmigen Bereich bilden, welcher zur Zentrale konzentrisch angeordnet ist, wobei der Umfang der Farbfiltersegmente zwei radiale Bereiche mit jeweils mindestens einer Einformung umfasst derart, dass die Einformungen benachbarter Farbfiltersegmente im Zusammenspiel Löcher bilden in die sich auf dem Träger vorgesehene Zapfen formschlüssig einfügen.

Erfindungsgemäß sind hierzu einstückige Farbradsegmente notwendig, deren Umfang einen äußeren Kreisbogen aufweisst sowie zwei radiale Teile, die zumindest einen linear verlaufenden Bereich umfassen, deren Verlauf derart zueinander orientiert ist, dass die geradlinigen Verlängerungen zu einem Schnittpunkt führen derart, dass der lineare Verlauf der radialen Teile durch jeweils zumindest eine Einformung unterbrochen ist.

### Kurze Beschreibung der Zeichnungen

- Figur 1a: Farbrad gemäß Stand der Technik
- Figur 1b: Explosionsansicht des Farbrades gemäß Stand der Technik
- Figur 1c: Assembliertes Farbrad gemäß Stand der Technik
- Figur 2a: Farbrad Segment gemäß einer ersten Ausführungsform der vorliegenden Erfin- dung
- Figur 2b: Explosionsansicht des Farbrades gemäß der Ausführungsform nach Figur 2a
- Figur 2c: Assembliertes Farbrad gemäß der Ausführungsform nach Figur 2a
- Figur 3a: Farbradsegment gemäß einer zweiten Ausführungsform der vorliegenden Er- findung
- Figur 3b: Explosionsansicht des Farbrades gemäß der Ausführungsform nach Figur 3a
- Figur 3c: Assembliertes Farbrad gemäß der Ausführungsform nach Figur 3a
- Figur 3d: Assembliertes Farbrad ohne Befestigungsring
- Figur 4a: Farbradsegment gemäß einer dritten Ausführungsform der vorliegenden Erfin- dung
- Figur 4b: Explosionsansicht des Farbrades gemäß der Ausführungsform nach Figur 4a
- Figur 4c: Assembliertes Farbrad gemäß der Ausführungsform nach Figur 4a, wobei die Segmente noch nicht am Träger fixiert sind
- Figur 4d: Assembliertes Farbrad gemäß dem Rad nach Figur 4 wobei die Fixierung mit- tels eines Schmelzprozesses erreicht ist.
- Figur 5: Weitere erfindungsgemäße Ausführungsform der Komponenten eines Farbra- des

### Detaillierte Beschreibung der Erfindung

Im Folgenden wird die Erfindung anhand von Figuren im Detail beschrieben. Einige bevorzugte Ausführungsformen werden diskutiert. Allerdings wird im nächsten Abschnitt eine typische Lösung gemäß dem Stand der Technik beschrieben, um dann spezifisch die Vorteile der vorliegenden Erfindung gegenüber dem Stand der Technik aufzeigen zu können.

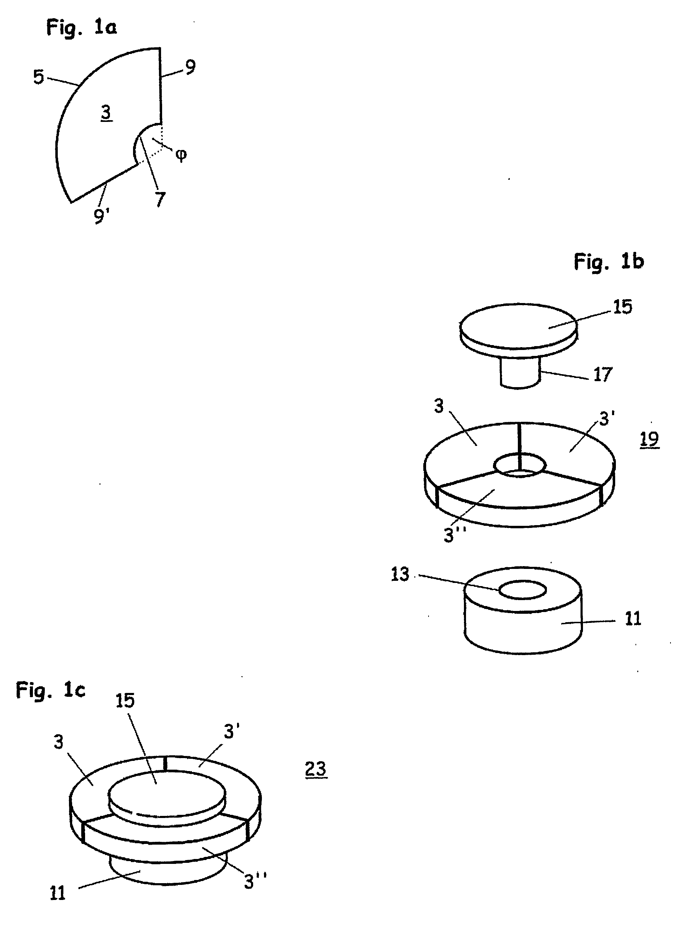

Die Figuren 1a-c zeigen eine Komponente gemäß dem Stand der Technik. Figur 1a zeigt ein Farbradsegment 3, wobei der Umfang einen äusseren Kreisbogen 5, einen inneren Kreisbogen 7 und zwei lineare radiale Teile 9, 9' umfasst. In diesem Beipiel spannt die Interpolation der beiden radialen Teile 9,9' zu ihrem Schnittpunkt einen Winkel ϕ von 120° auf. Daher bilden drei dieser Segmente 3, 3', 3" einen kompletten Farbring 19, wie die Figur 1b zeigt. Jedes der Segmente 3, 3', 3" kann ein Farbfilter umfassen, welches sich von den anderen unterscheidet.

Beispielsweise kann Segment 3 einen Blautransmissionsfilter umfassen, der sich **dadurch auszeichnet, dass** er Licht mit Wellenlängen von 420nm bis 500nm transmittiert und den Rest des sichtbaren Lichtes im Wesentlichen reflektiert. Segment 3' kann ein Rottransmissionsfilter umfassen, der sich dadurch auszeichnet, dass er Licht mit Wellenlängen zwischen 600nm und 680nm transmittiert und den Rest des sichtbaren Lichtes im Wesentlichen reflektiert. Segment 3" kann ein Grüntransmissionsfilter umfassen, der sich dadurch auszeichnet, dass er Licht mit Wellenlängen zwischen 500nm und 600nm transmittiert und den Rest des sichtbaren Lichtes im Wesentlichen reflektiert.

Die Anzahl der Segmente, die den Ring formen können von der Zahl 3 abweichen.Ausserdem können die Räder auch Segmente mit identischen optischen Filtern oder neutral weiße Elemente umfassen. Der Segmentwinkel ϕ kann für jedes Segment individuell gewählt werden, solange die Summe der Winkel 360° entspricht, um einen Ring zu formen.

Um die vorliegende Erfindung zu erläutern ist es allerdings ausreichend sich in den Beispielen auf Farbräder mit nur drei Segmenten zu beschränken, wobei dies nicht die Erfindung auf 3-Segment Farbräder einschränken soll.

Figur 1b zeigt die Explosions-Ansicht einer Farbradkomponente wobei der Farbring 19 an einem Träger 11 befestigt ist. In einigen Lösungen gemäß dem Stand der Technik werden die Segmente an den Träger geklebt. Manchmal, wie in Figur 1b gezeigt, umfasst der Träger 11 ein zylindrisches Loch 13 und zur Befestigung der Segmente ist eine Befestigungsscheibe 15 mit einem Befestigungszylinder 17 vorgesehen. Zur Assemblierung des Systems wird der Befestigungszylinder 17 in das zylindrische Loch 13 gepresst und die Befestigungsscheibe klemmt die Segmente 3,3',3" zwischen sich und dem Träger 11 ein. In diesem Fall bestehen der Träger 11 und auch die Befestigungsscheibe 15 und der Befestigungszylinder 17 aus Metall um einen guten mechanischen Kontakt zu gewährleisten, um den Radialkräften, die die Segmente bei Rotation des Rades auf den Kontak ausüben, standzuhalten.

Figur 1c zeigt schliesslich das assemblierte Farbrad 23 gemäß dem Stand der Technik. In dem beschriebenen Beispiel sind die Segmente einstückige Teile, die an den Träger geklebt und zwischen Träger und einer Befestigungsscheibe eingeklemmt sind

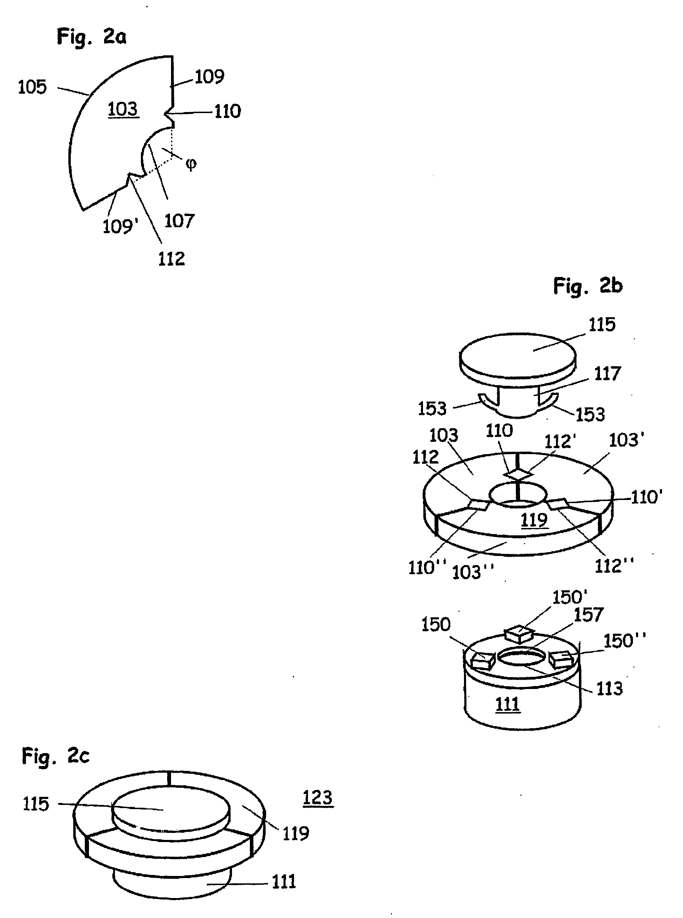

Die Figuren 2a bis 2c zeigen Segmente sowie ein Farbrad gemäß einer ersten bevorzugten Ausführungsform der vorliegenden Erfindung. Figur 2a zeigt ein einstückiges Farbradsegment 103 mit einem Umfang, der einen äußeren Kreisbogen 105 und einen inneren Kreisbogen 107 sowie zwei Radialteile 109, 109' besitzt. Beide radialen Teile 109, 109' umfassen mindestens eine dreieckige Einformung 110, 112.

Werden drei solcher einstückigen Farbradsegmente 103, 103' 103" zu einem kompletten Farbring 119 zusammengesetzt, dann bilden die benachbarten Einformungen 110, 112' benachbarter Segmente ein rechteckiges, vorzugsweise ein quadratisches Loch.

Die Segmente werden auf einen Träger 111 so befestigt, dass sich auf dem Träger 111 vorgesehene Zapfen 150,150',150" formschlüssig in die Einformungen 110, 110', 110", 112, 112', 112" einfügen. Mit diesen sich in die Einformungen einfügenden Zapfen sind die Segmente automatisch justiert. Im hier beschriebenen Beispiel ist die Höhe der Zapfen 150, 150', 150" geringer als die Dicke des Glases der Segmente 103, 103', 103". Das Glas kann zum Beispiel eine Dicke von 1.2mm besitzen und die Höhe der Zapfen kann mit 1mm dementsprechend weniger betragen. Der Unterschied kann jedoch minimal klein gewählt werden.

In gleicher Art, wie bereits für den Stand der Technik beschrieben, umfasst der Träger 111 ein zylindrisches Loch 113 und der Farbring 119 ist zwischen einer Befestigungsscheibe 115 und dem Träger 111 eingeklemmt. Ein an der Befestigungsscheibe 115 vorgesehener Befestigungszylinder 117 wird in das zylindrische Loch 113 gepresst. Um die Befestigungsscheibe 115 am Träger 111 zu befestigen kann zusätzlich ein Ankerprinzip verwendet werden. Ein solches Ankerprinzip erfordert einen Anker der am Befestigunszylinder 117 vorgesehen ist, sowie eine zusätzliche Aussparung 157 die im zylindrischen Loch 113 des Trägers 111 vorgesehen ist

Einer der Vorteile der Verwendung von Zapfen 150, 150', 150", die sich formschlüssig in die Einformungen 110, 110', 110" und 112, 112', 112" einfügen ist, dass die einstückigen Segmente automatisch zum Träger justiert sind. Ein weiterer, grosser Vorteil der Verwendung von Zapfen und Einformungen in der beschriebenen erfinderischen Art und Weise besteht darin, dass die Segmente, sind sie einmal axial, beispielsweise mittels der Befestigungsscheibe 115 an den Träger fixiert, die bei der Rotation auftretenden Zentrifugalkräfte hauptsächlich auf die Zapfen 150, 150', und 150" übertragen.

Mit anderen Worten: Das System der Zapfen und der Einformungen bilden im Zusammenspiel mechanische Mittel, auf die die Zentrifugalkräfte der Segemente übertragen werden und diesen wiederstehen. Diese Mittel zu Aufnahme der Radialkräfte sind damit separiert von den Mitteln zu axialen Fixierung der Segmente zu dem Träger.

Aus diesem Grund können der Träger 111 und/oder die Befestigungsscheibe 115 zusammen mit dem Befestigungszylinder 117 und auch gegebenenfalls dem Anker 153 in günstig zu produzierender Weise aus Kunststoff geformt sein. Zusätzlich wird dadurch eine Assemblierung ohne die Verwendung von Klebstoff ermöglicht.

Die Zapfen, die sich in die Einformungen einfügen, können natürlich auch auf der Unterseite der Befestigungsscheibe 115 vorgesehen sein. Wie bereits erwähnt ist in diesem Ausführungsbeispiel die Höhe der Zapfen geringer zu wählen als die Dicke der Segmente, um zu garantieren, dass die Segmente durch die Befestigungsscheibe effektiv axial an den Träger drückt werden.

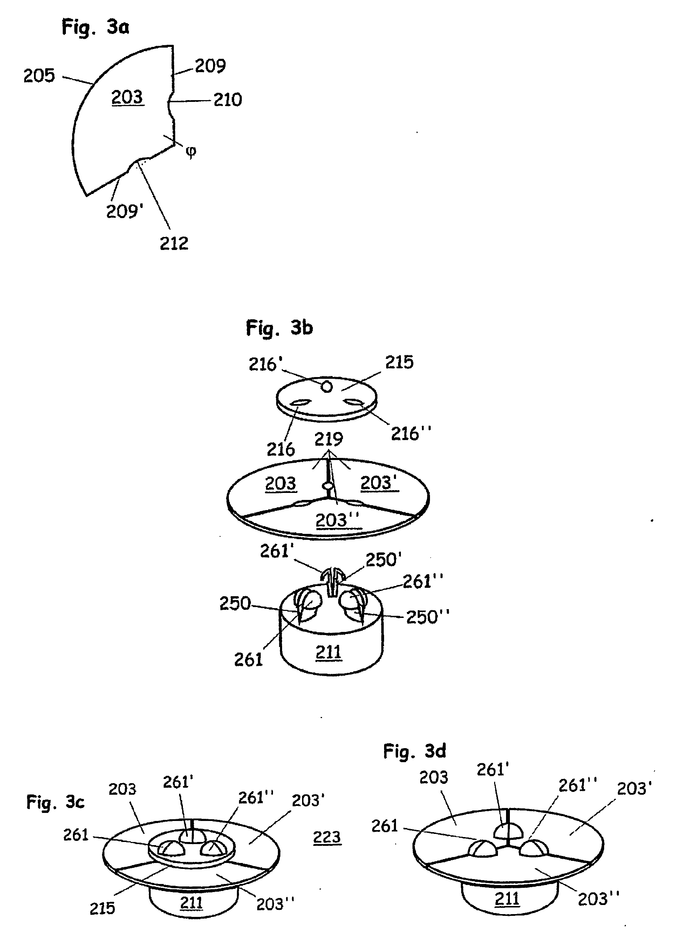

Im Unterschied dazu ist dies im zweiten Ausführungsbeispiel gemäß der vorliegenden Erfindung nicht der Fall, wie in den Figuren 3a bis 3d dargestellt. Um Beispiele für verschiedene Einformungen zu geben, umfasst das in Figur 3a gezeigte einstückige Segment 203 konkave Einformungen in den radialen Teilen seines Umfangs. In diesem Beispiel kann von der Realisation eines inneren Kreisbogens abgesehen werden, da kein Befestigungszylinder zum Einsatz kommt.

Drei solcher Segmente 203, 203', 203" werden dann, wie in Figur 3b gezeigt, zu einem Farbring 219 zusammengelegt derart, dass die Einformungen benachbarter Segmente zumindest angenähert ovale Löcher bilden. Die Segmente werden auf dem Träger 211 angeordnet, auf dem wiederum Zapfen 250, 250', 250" vorgesehen sind. Diese Zapfen haben die Form von ovalen Zyplindern sowie Köpfe, die als Anker fungieren können. In diesem Ausführungsbeispiel entspricht die Höhe der ovalen Zylinder der Zapfen der Dicke der Segmente. Werden nun die Segmente 203, 203', 203" auf der Oberfläche des Trägers 211 angeordnet, so fungieren die Zapfen zusammen mit den Köpfen als Anker, die die Segmente axial ausreichend an den Träger fixieren, ohne dass eine zusätzliche Befestigungsscheibe notwendig wäre.

Ein solches assembliertes Farbrad ist in Figur 3b dargestellt. Gezeigt sind hier gespaltene Zapfen 250, 250', 250". Allerdings kennt der Fachmann unterschiedlichste Varianten des Ankerprinzips das hier zu Anwendung kommt. Es ist zum Beispiel durchaus möglich die Köpfe der Zapfen verformbar zu gestalten anstatt die Zapfen selbst zu spalten.

Natürlich kann, fall gewünscht auch hier eine Befestigungsscheibe 215 zum Einsatz kommen, welche ovale Löcher 216, 216', 216" enthält - allerdings ist kein Befestigungszylinder vorgesehen. Die Figur 3c zeigt ein assembliertes Farbrad 223 das eine solche Befestigungsscheibe 215 umfasst. In dem Fall muss allerdings die Höhe der Zapfen 250, 250' 250" angepasst werden, wie dem Fachmann einleuchtet.

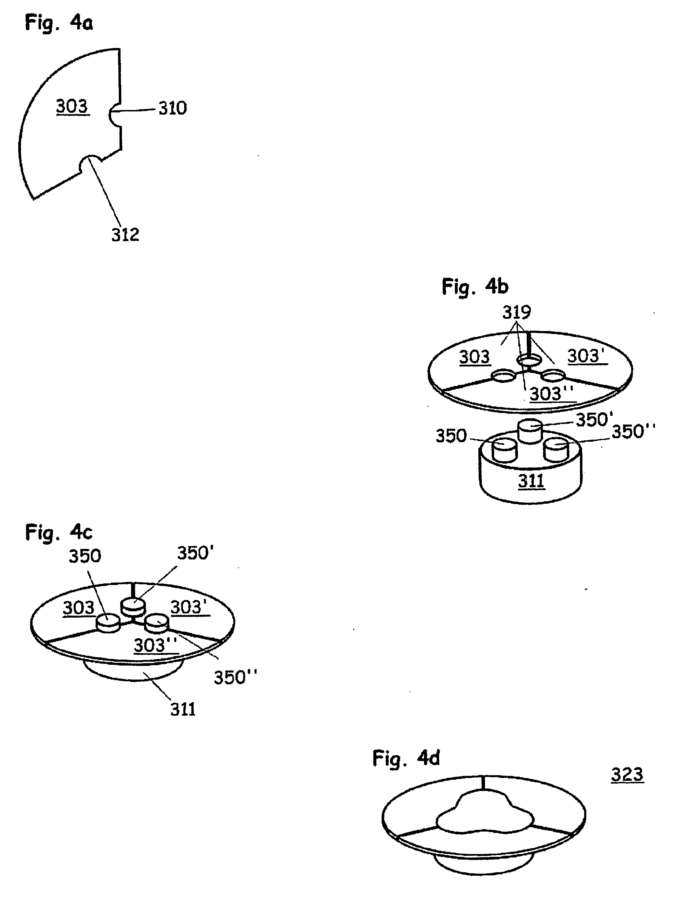

Die Figuren 4a bis 4d beziehen sich auch eine dritte Ausführungsform der vorliegenden Erfindung. Hierbei sind als Beispiel halbkreisförmige Einformungen 310, 312 in den radialen Teilen des Umfangs des Segmentes 303 vorgesehen, wie die Figur 4a zeigt.

In Figur 4b werden 3 solche Segmente auf einem Träger 311 angeordnet. Dieser Träger umfasst Zapfen 350, 350', 350" die sich in die Einformungen einfügen: Die Einformungen benachbarter Segmente bilden kreisförmige Löcher. In diesem Fall überragt die Höhe der Zapfen die Dicke der Segmente. Sind die Zapfen aus Material geformt, das geschmolzen werden kann, so können nun die über die Segmente herausragenden Enden geschmolzen werden und durch ihre Verbreiterung die Segmente axial fixieren, wie in Figur 4d gezeigt.

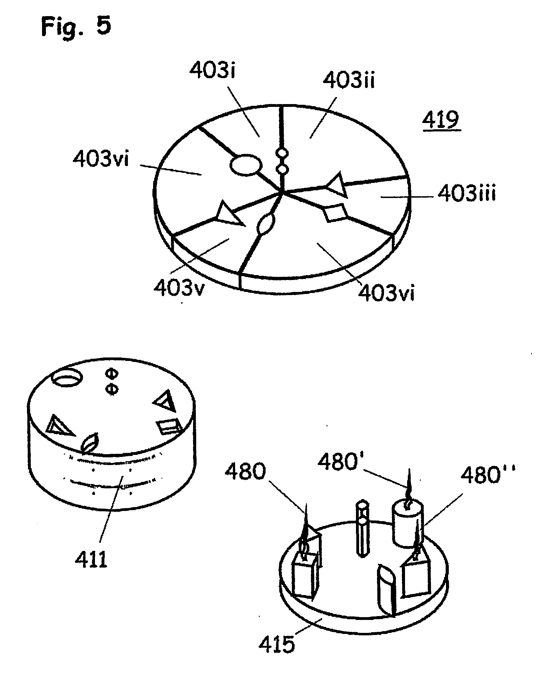

Einem etwas anderen Aspekt der vorliegenden Erfindung Rechnung tragend kann das System aus Zapfen und Einformungen dazu vorteilhaft verwendet werden, beim Assemblieren Fehler zu vermeiden. Besonders dann nämlich, wenn mehr als 3 Segmente zu einem Farbring zusammengefügt werden ist es mitunter sehr wichtig die Segmente in der richtigen Reihenfolge und auch richtig orientiert einzusetzen. Werden zwei Segmente vertauscht, oder werden unbeabsichtigt Rückseite und Vorderseite eines Segmentes vertauscht so ist das entstandene Farbrad häufig unbrauchbar. Um solche Verwechslungen zu verhindern ist es möglich den Einformungen und den entsprechenden Zapfen unterschiedliche spezifische geometrische Formen zu geben. Als Folge ist es gar nicht mehr möglich die Segmente falsch zu assemblieren. In Figur 5 ist demgemäß eine Ausführungsform gezeigt die diesen Aspekt betont. Gezeigt ist ein System mit Befestigungsscheibe 415, die Zapfen in der Form von Prismen, Zylinder, Quader und weitere unterschiedliche Formen umfasst. Der Träger umfasst hier Einbuchtungen mit entsprechender geometrischer Form zur Aufnahme der Zapfen. Gezeigt ist auch eine weitere Möglichkeit die Befestigungsscheibe an den Träger zu befestigen: 480, 480', und 480" sind Schrauben die in den Träger gedreht werden können.

### Bezugszeichenliste:

- 3: Farbradsegment
- 3': Farbradsegment
- 3": Farbradsegment
- 5: äußerer Kreisbogen
- 7: innerer Kreisbogen
- 9: linearer radialer Teil
- 9': linearer radialer Teil
- 11: Träger
- 13: zylindrisches Loch
- 15: Befestigungsscheibe
- 17: Befestigungszylinder
- 19: Farbring
- 23: Farbrad

- 103: Farbradsegment
- 103': Farbradsegment
- 103": Farbradsegment
- 105: Äusserer Kreisbogen
- 107: Innerer Kreisbogen
- 109: radialer Teil
- 109': radialer Teil
- 110: Einformung
- 110': Einformung
- 110": Einformung
- 111: Träger
- 112: Einformung
- 112': Einformung
- 112": Einformung
- 113: zylindrisches Loch
- 115: Befestigungsscheibe
- 117: Befestigungszylinder
- 119: Farbring
- 123: Farbrad
- 150: Zapfen
- 150': Zapfen
- 150': Zapfen
- 153: Anker
- 157: Aussparung

- 203: Farbradsegment
- 203': Farbradsegment
- 203": Farbradsegment
- 210: Einformung
- 212: Einformung
- 209: radialer Teil des Umfangs
- 209': radialer Teil des Umfangs
- 205: äusserer Kreisbogen
- 211: Träger
- 215: Befestigungsscheibe
- 216: ovales Loch
- 216': ovales Loch
- 216": ovales Loch
- 219: Farbring
- 250: Zapfen
- 250': Zapfen
- 250": Zapfen
- 261: Kopf des Zapfen
- 261': Kopf des Zapfen
- 261": Kopf des Zapfen
- 223: Farbrad

- 303: Farbradsegment
- 303': Farbradsegment
- 303": Farbradsegment
- 310: Einformung
- 312: Einformung
- 311: Träger
- 319: Farbring
- 350: Zapfen
- 350': Zapfen
- 350": Zapfen
- 323: Farbrad
- 403i: Farbradsegment
- 403ii: Farbradsegment
- 403iii: Farbradsegment
- 403iv: Farbradsegment
- 403v: Farbradsegment
- 403vi: Farbradsegment
- 411: Träger
- 415: Befestigungsring
- 419: Farbring
- 480: Schraube
- 480': Schraube
- 480": Schraube

## Patentansprüche

1. Farbrad für Projektoren zur Erzeugung von Farbbildern auf einem Schirm, mit einem scheibenförmigen Träger, welcher um die Zentralachse rotierbar ist und am Träger angebrachte plane aus einem Stück gefertigt Farbfiltersegmente aufweist, welche in radialer Richtung zur Rotationsachse ausgerichtet sind und an der Trägerperipherie einen kreisringförmigen Bereich bilden welcher zur Zentralachse konzentrisch angeordnet ist, wobei der Umfang der Farbfiltersegmente jeweils zwei radiale Bereiche mit jeweils mindestens einer Einformung umfasst derart, dass die Einformungen benachbarter Farbfiltersegmente im Zusammenspiel Löcher bilden, in die sich auf dem Träger befindliche Zapfen formschlüssig einfügen.

2. Farbrad nach Anspruch 1, **dadurch gekennzeichnet, dass** die Höhe der Zapfen nicht die Dicke der Segmente überschreitet und vorzugsweise kleiner ist und dass im Zentralbereich des Trägers Mittel zur Fixierung einer Befestigungsscheibe vorgesehen sind, die es im Zusammenspiel mit der Befestigungsscheibe erlauben, die Farbfiltersegmente zwischen Träger und Befestigungsscheibe axial zu fixieren.

3. Farbrad nach Anspruch 1, **dadurch gekennzeichnet, dass** eine ausreichende Anzahl der Zapfen mit Köpfen versehen ist um die Fixierung die Farbfiltersegmente zwischen Kopf und Träger axial vorzugsweise ohne zusätzliche Befestigungsscheibe zu gewährleisten.

4. Farbrad nach Anspruch 1, **dadurch gekennzeichnet, dass** die auf dem Träger vorgesehenen Zapfen zumindest teilweise unterschiedliche Mantelgeometrie aufweisen und die Einformungen der für einen jeweiligen Zapfen vorgesehenen benachbarten Segmente dieser Geometrie angepasst sind derart, dass ein falsches Anordnen der Segmente beim Assemblierprozess ausgeschlossen ist.

## Claims

1. Colour wheel for projectors for generating coloured images on a screen, with a disc-shaped carrier that is rotatable about the central axis and has flat colour filter segments attached on the carrier and made from one piece, which segments are aligned in the radial direction to the rotation axis and on the carrier periphery form a circular region which is arranged concentric to the central axis, where the extent of the colour filter segments each comprises two radial zones each with at least one recess such that the recesses of adjacent colour filter segments in interplay form holes in which pegs present on the carrier are inserted by form fit.

2. Colour wheel according to claim 1, **characterised in that** the height of the pegs does not exceed the thickness of the segments and is preferably smaller, and that in the central region of the carrier are provided means for fixing a fixing disc, which means in interplay with the fixing disc allow the colour filter segments to be fixed axially between the carrier and the fixing disc.

3. Colour wheel according to claim 1, **characterised in that** a sufficient number of pegs is fitted with heads to guarantee the fixing of the colour filter segments axially between the head and carrier, preferably without additional fixing disc.

4. Colour wheel according to claim 1, **characterised in that** the pegs present on the carrier have at least partly different casing geometry and the recesses of adjacent segments intended for a respective peg are adapted to this geometry such that incorrect arrangement of the segments during the assembly process is excluded.

## Revendications

1. Roue chromatique pour projecteurs servant à produire des images en couleur sur un écran, avec un support en forme de disque, lequel peut tourner autour d'un axe central et présente des segments de filtre coloré plans, fabriqués d'une seule pièce, fixés sur le support, lesquels sont orientés dans le sens radial par rapport à l'axe de rotation et forment à la périphérie du support une zone en forme d'anneau circulaire, laquelle est disposée concentriquement par rapport à l'axe central, le pourtour des segments de filtre coloré comprenant respectivement deux zones radiales avec respectivement au moins une échancrure de telle sorte que les segments de filtre coloré voisins des échancrures forment en coaction des trous dans lesquels des tenons, qui se trouvent sur le support, s'engagent de manière positive.

2. Roue chromatique selon la revendication 1, **caractérisée en ce que** la hauteur des tenons n'excède pas l'épaisseur des segments et est de préférence inférieure, et **en ce que** des moyens pour fixer un disque d'attache sont prévus dans la région centrale du support, lesquels permettent, en coaction avec le disque d'attache, de fixer axialement les segments de filtre coloré entre le support et le disque d'attache.

3. Roue chromatique selon la revendication 1, **caractérisée en ce qu'**un nombre suffisant de tenons est prévu pour garantir axialement, de préférence sans l'aide d'un disque d'attache supplémentaire, la fixation des segments de filtre coloré entre la tête et le support.

4. Roue chromatique selon la revendication 1, **caractérisée en ce que** les tenons, qui sont prévus sur le support, présentent au moins en partie une géométrie d'enveloppe différente, et **en ce que** les échancrures des segments avoisinants prévus pour un tenon respectif sont adaptées à cette géométrie, de telle sorte qu'une disposition erronée des segments soit exclue lors du processus d'assemblage.
